Europäisches Patentamt

European Patent Office

Office européen des brevets

(11) Veröffentlichungsnummer: **0 217 254**
**B1**

# (12) EUROPÄISCHE PATENTSCHRIFT

(45) Veröffentlichungstag der Patentschrift:
**05.09.90**

(21) Anmeldenummer: **86113019.3**

(22) Anmeldetag: **22.09.86**

(51) Int. Cl.⁵: **B65D 21/02**, G11B 23/02

(54) Stapelbarer Verpackungsbehälter für Aufzeichnungsträger.

(30) Priorität: **02.10.85 DE 8528059 U**

(43) Veröffentlichungstag der Anmeldung:
**08.04.87 Patentblatt 87/15**

(45) Bekanntmachung des Hinweises auf die Patenterteilung:
**05.09.90 Patentblatt 90/36**

(84) Benannte Vertragsstaaten:
**CH DE FR GB IT LI NL SE**

(56) Entgegenhaltungen:
**DE-U- 7 127 291**
**GB-A- 2 142 607**
**US-A- 4 289 285**

(73) Patentinhaber: **Agfa-Gevaert AG,**
**D-5090 Leverkusen 1(DE)**

(72) Erfinder: **Thiele, Hartmut, Herterichstrasse 83,**
**D-8000 München 71(DE)**

## Beschreibung

Die Neuerung betrifft einen stapelbaren Verpackungsbehälter für aufgespulte bandförmige Bild- oder Tonaufzeichnungsträger, welcher beim Stapeln und beim Transport gegen Verrutschen beziehungsweise Verschieben gesichert ist.

Zur Archivierung und zum Transport von aufgespulten bandförmigen Bild- oder Tonaufzeichnungsträgern existiert eine große Anzahl verschiedenartiger Verpackungsbehälter, sei es für Compact-Cassetten, Tonband- oder Film-Spulen oder Audiobeziehungweise Video-Bänder für Studiozwecke. Dabei ergibt sich die Notwendigkeit, daß, wenn mehrere Verpackungsbehälter gestapelt oder transportiert werden sollen, sie gegen Verrutschen oder Verschieben zuverlässig gesichert sind, andernfalls muß eine zusätzliche Verpackung oder eine andere Sicherungsmaßnahme vorgesehen werden.

In der DE-A 34 20 070 wird ein Behälter für eine Magnetbandkassette beschrieben, der innen Nuten sowie fein aufgerauhte Bereiche aufweist, um auf diese Weise den Inhalt gegen Herausrutschen zu sichern, jedoch wird auf diese Weise nicht das oben genannte Problem beim Stapeln mehrerer Behälter gelöst. Zwar gibt es auf dem Markt Verpackungsbehälter, deren äußere Oberfläche geometrische Muster oder ein rauhes Profil besitzen, wie auch in dem oben angegebenen Dokument beschrieben, jedoch bieten diese Maßnahmen keinen ausreichenden Schutz gegen Verrutschen oder Verschieben.

Die vorliegende Neuerung löst die Aufgabe, einen gegen Verrutschen oder Verschieben zuverlässig gesicherten Verpackungsbehälter für aufgespulte bandförmige Bild- oder Tonaufzeichnungsträger zu schaffen. Diese Aufgabe wird dadurch gelöst, daß auf der äußeren Oberfläche des Verpackungsbehälters ganz oder teilweise ein geometrisches, regelmäßig angeordnetes Noppenmuster derart ausgebildet ist, daß beim Stapeln zweier Behälter jeweils Vorsprünge des Noppenmusters des ersten Behälters in die Grundfläche oder in Vertiefungen des zweiten Behälters hineinpassen. In einer bevorzugten Ausführung ist das Noppenmuster kalottenförmig ausgebildet.

Ein derartiges Noppenmuster ist an sich beispielsweise aus der US-A 4 289 285 bekannt. Darin wird eine Gleitfolie für Compact-Cassetten beschrieben, deren innere dem Bandwickel zugewandte Seite noppenartige Vorsprünge aufweist, die durch Verringerung der Reibungsfläche in der Cassette den Bandlauf erleichtern sollen. Bei der vorliegenden Neuerung hat das Noppenmuster dagegen die Aufgabe, durch formschlüssiges Ineinandergreifen zweier Oberflächenmuster eine gegenseitige Verschiebung zu verhindern.

Die Neuerung wird nun anhand der Zeichnungen näher beschrieben und zwar zeigt

Figur 1 die perspektivische Ansicht eines Verpackungsbehälters mit dem neuerungsgemäßen Noppenmuster

Figur 2 in Draufsicht eine schematische Darstellung des Ineinanderpassens von zwei Flächen mit Noppenmuster

Figur 3 einen Schnitt durch die Linie III von Figur 2.

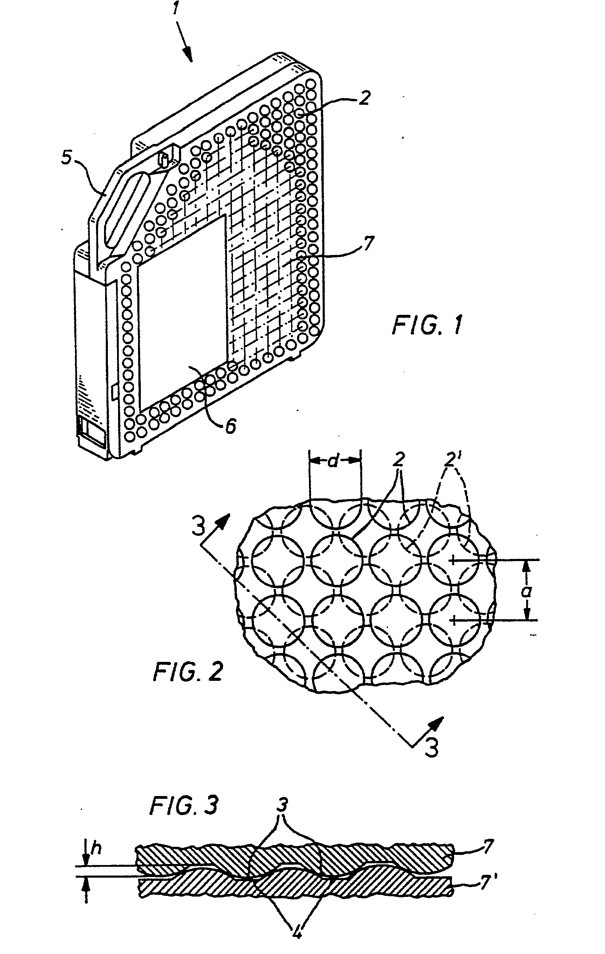

Als Anwendungsbeispiel eines neuerungsgemäßen Verpackungsbehälters zeigt Figur 1 einen Videokoffer 1 mit der Seitenfläche 7. Derartige Verpackungsbehälter sind beispielsweise aus dem deutschen Gebrauchsmuster DE-U 80 16 911 der Anmelderin bekannt. Sie bestehen üblicherweise aus Kunststoff und werden formgespritzt oder extrusionsgeblasen. Der Koffer besitzt einen Haltegriff 5, der in einer bekannten Ausführung asymmetrisch angeordnet ist, so daß ein Benutzer zwei Koffer mit einer Hand tragen kann. Aus Handling-Gründen ergibt sich dabei die Notwendigkeit, daß die beiden Koffer ohne gegeneinander sich zu verschieben, transportiert werden können, was mit dem neuerungsgemäßen Noppenmuster gelöst wird. Dazu sind die Seitenflächen 7 des Videokoffers ganz oder teilweise mit dem Noppenmuster 2 versehen, welches, wie Figur 2 darstellt, eine geometrisch regelmäßige Anordnung besitzt. In einer bevorzugten Ausführung ist das Noppenmuster in Form von Kalotten ausgebildet. Ein Teil 6 der Seitenfläche 7 kann zum Zweck der Etikettierung frei vom Noppenmuster 2 sein.

Abstand a, Durchmesser d und Höhe h (Figur 2 und 3) der einzelnen Kalotten sind je nach Größe des stapelbaren Verpackungsbehälters und je nach Verwendungszweck in bestimmten Grenzen wählbar, wobei wegen des geometrisch regelmäßigen Musters die Dimensionen der drei Größen im allgemeinen voneinander abhängig sind.

Beispielsweise beträgt, wie in Figur 1 dargestellt, bei einem Koffer, der ein 1-Zoll-Videoband mit ca. 1 400 m Länge enthält, der Abstand zweier Kalotten ca. 9 mm, der Durchmesser einer Kalotte beträgt ca. 6 mm und die Kalottenhöhe ist 1 mm.

Werden nun, wie in Figur 2 in Draufsicht und in der Figur 3 im Querschnitt schematisch dargestellt, zum Zweck des Stapelns oder Transports mehrerer Verpackungsbehälter die Flächen 7 und 7' aufeinandergelegt, so greifen die Kalotten 2 und 2' der entsprechenden Noppenmuster so ineinander, daß ein seitliches Verrutschen beziehungsweise Verschieben der Verpackungsbehälter nicht mehr möglich ist, da die höckerartige Kalottenfläche 3 der Fläche 7 in die entsprechende Grundfläche beziehungsweise Vertiefung 4 der Fläche 7' hineingreift. Zu diesem Zweck wird in bevorzugter Weise das Noppenmuster der Fläche 7 gegen das der Fläche 7' so in der Lage versetzt, daß die beiden aneinandergrenzenden Verpackungsbehälter kantenkonform aufeinander passen.

Packungsbehälter mit dem neuerungsgemäßen Noppenmuster sind somit nicht nur beim Stapeln und beim Transport zuverlässig gegen Verrutschen gesichert, sondern besitzen auch in Folge der geometrischen Struktur ihrer Oberfläche ein gefälliges Äußeres.

## Patentansprüche

1. Verpackungsbehälter für aufgespulte bandförmige Bild- oder Tonaufzeichnungsträger, dadurch gekennzeichnet, daß auf der äußeren Oberfläche (7, 7') des Verpackungsbehälters (1) ganz oder teilweise ein geometrisches regelmäßig angeordnetes Noppenmuster (2) derart ausgebildet ist, daß beim Stapeln zweier Behälter (1) jeweils Vorsprünge (3) des Noppenmusters (2) des ersten Behälters in die Grundfläche oder in Vertiefungen (4) des zweiten Behälters hineinpassen.

2. Verpackungsbehälter nach Anspruch 1, dadurch gekennzeichnet, daß das Noppenmuster (2) kalottenförmig ausgebildet ist.

## Claims

1. A packaging container for wound video or audio recording tapes, characterized in that a geometric, regularly arranged knop pattern (2) is formed completely or partly over the outer surface (7, 7') of the packaging container (1) in such a way that, when two containers (1) are stacked, projections (3) of the knop pattern (2) of the first container fit into the base or into depressions (4) of the second container.

2. A packaging container as claimed in claim 1, characterized in that the knop pattern is hemispherical in shape.

## Revendications

1. Conteneur d'emballage pour supports d'enregistrement vidéo ou audio en forme de bandes bobinées, caractérisé en ce qu'on forme sur la totalité ou sur une partie de la surface extérieure (7, 7') du conteneur d'emballage (1), un motif géométrique à boutons (2), disposé régulièrement, de manière que lors de l'empilage de deux conteneurs (1), les reliefs (3) du motif à boutons (2) du premier conteneur s'ajustent dans la surface de base ou dans les creux (4) du deuxième conteneur.

2. Conteneur d'emballage selon la revendication 1, caractérisé en ce que le motif à boutons (2) est en forme de calotte.

EP 0 217 254 B1

FIG. 1

FIG. 2

FIG. 3